# EUROPEAN PATENT SPECIFICATION

(11) **EP 1 249 695 B1**
(45) Date of publication and mention of the grant of the patent: **01.03.2006**
(21) Application number: 02450084.5
(22) Date of filing: 11.04.2002
(51) Int. Cl.: G01N 1/22

(54) **Active pulsation cancellation device for diesel particulate sampling systems**
Aktive Druckschwingungsdämpfer zur Probenentnahme von Teilchen aus Dieselmotorabgasen
Dispositif actif de suppression des impulsions de pression pour un système d'échantillonnage de particules diesel

(30) Priority: 13.04.2001 US 283877 P
(43) Date of publication of application: 16.10.2002
(73) Proprietor: AVL List GmbH, 8020 Graz (AT)
(72) Inventor: Silvis, William Martin, Ann Arbor, MI 48105 (US); Kreft, Norbert, Ann Arbor, MI 48105 (US); Schindler, Wolfgang, Dr., 8043 Graz (AT); Marek, Gerald, Ann Arbor, MI 48108 (US)
(74) Representative: Babeluk, Michael

(56) References cited:
- EP-A- 0 611 962
- US-A- 5 052 425
- US-A- 6 062 092
- US-B1- 6 200 819
- PATENT ABSTRACTS OF JAPAN vol. 009, no. 070 (M-367), 30 March 1985 (1985-03-30) & JP 59 201915 A (HINO JIDOSHA KOGYO KK), 15 November 1984 (1984-11-15)

## Description

### BACKGROUND OF THE INVENTION

The present invention relates to a particulate sampler for conveying exhaust gas from exhaust gas source to analysis equipment, said particulate sampler comprising:
- a probe for receiving the exhaust gas;
- a transfer tube for conveying the exhaust gas from a tailpipe to a mixer, said mixer mixing the exhaust gas and a dilution gas; and
- a dilution tunnel for mixing and conveying the exhaust gas and dilution gas from said mixer to analysis equipment; and
- a flow pulsation cancellation device in communication with at least one of said tailpipe, probe, transfer tube, mixer, and a dilution tunnel for introducing a canceling pressure pulse to minimize the effects of pressures pulses present within the tailpipe, wherein the flow pulsation cancellation device includes at least one pressure sensor connected to a controller for sensing the pressure fluctuations within the tailpipe.

It may be desirable to utilize a shorter probe for a diesel particulate sampler to provide more accurate detection and measurement of particular matter. Utilizing a significantly shorter probe than the prior art may cause the sampler to be more sensitive to flow and pressure fluctuations present in the tailpipe. Internal combustion engines cause cyclic exhaust fluctuations as the engine pistons reciprocate and exhaust valves open. During a pressure drop, sample exhaust gas and dilution gas may be undesirably drawn out of the probe and back into the tailpipe, thereby changing the dilution ratio In an uncontrolled manner. The portion of the probe within the tailpipe may be lengthened to minimize the effects of the pressure fluctuations. However, the remaining effects of the pressure fluctuations may be undesirable in that the changes in dilution ratio are still unacceptable. As a result, it may be desirable to actively apply pressure pulses within the sampler of the same magnitude and in phase with the pressure pulses from the tailpipe.

The document US 6,062,092 A discloses a system for extracting samples from a stream in a conduit utilizing a probe, placed in the stream and having a channel for passing samples from the conduit stream. First and second pressure taps measure the pressure inside and outside of the probe. A feedback signal, based on a pressure differential relative to the probe, is generated and controls a valve regulating sample velocity flow through the probe channel, that bears a fixed proportion to the velocity of flow in the conduit.

JP 59-201915 A describes an exhaust equipment with a noise suppressing devices comprising a pressure sensor, a phase reversing circuit, an amplifier and a diaphragm which is driven via an exhaust pressure. The detected output is reversed by the phase reversing circuit and then sent to the amplifier. Resulting pressure waves having a phase reverse to said detected output are sent into the exhaust pipe by the diaphragm.

The publication EP 0 611 962 A discloses a method and an apparatus for extracting particulate from the exhaust gas of diesel engines comprising a dilution tunnel in which a portion of the exhaust gas is fed, together a flow of dilution atmospheric air. The diluted gas coming from the tunnel is passed through a filter for collecting the particulate contained in the gas and subsequent weighing thereof. A computer provides for processing the output signals from pressure and temperature meters as well as from volumetric flow meters of the dilution air and the diluted gas flow and gives a measurement of the volumetric flow of the dilution air, the diluted air and, by difference of the exhaust gas. In order to keep the diluted gas constant also during stages of the test when the gas is not passed through the filter, a by-pass conduit in parallel to the filter with a regulation valve is provided.

The US 5,313,407 A describes integrated vibration cancellation and machine diagnostic system, wherein a first sensor, an actuator and a second sensor are arranged in the same pipe, i.e., in the exhaust duct or pipe.

### BRIEF SUMMARY OF THE INVENTION

It is an object of the present invention to minimize the effects of said pressure fluctuations.

It is another object of the invention to provide a probe with very short dimensions.

Therefore, in accordance with the present invention, the flow pulsation cancellation device further includes a second pressure sensor being in communication with the mixer and connected to the controller for determining a difference in the reading between the sensors.

The flow pulsation cancellation device comprises at least one amplifier which is connected to the controller.

According to a preferred embodiment of the invention the flow pulsation cancellation devices includes at least one actuator, which is connected to the amplifier.

The actuator may comprise a membrane or speaker-like device.

The pressure within the particulate sampler is measured at a location such as the tunnel or at the mixer. Additionally, the pressures may be measured at the inlet of the probe and at the end of the transfer tube inside the mixer. A controller is connected to the pressure sensors and for canceling the effects of the pressure pulses from the tailpipe on the sampler. The controller commands an amplifier to drive an actuator such as a membrane or other similar device to introduce a pressure wave within a fluid passageway associated with the tunnel or mixer.

The actuator is in fluid communication with at least one of said tailpipe, probe, transfer tube, mixer and the dilution tunnel.

According to an alternative embodiment of the invention the flow pulsation cancellation device comprises at least one control valve being positioned in a dilution gas tubing which is in fluid communication with the mixer. In order to cancel the undesirable pressure wave introduced by the tailpipe the dilution gas flow rate introduced into the mixer may be varied.

### BRIEF DESCRIPTION OF THE DRAWINGS

In the drawings:
- Figure 1a: is a schematic view of one embodiment of a pulsation cancellation device utilizing a membrane;
- Figure 1b: is a schematic view of another embodiment of the pulsation cancellation device utilizing a membrane;
- Figure 2: is a schematic view of yet another embodiment of the pulsation cancellation device utilizing a proportional control valve; and
- Figure 3: is a graphical view of pulsation cancellation utilizing the present invention.

### DETAILED DESCRIPTION OF THE INVENTION

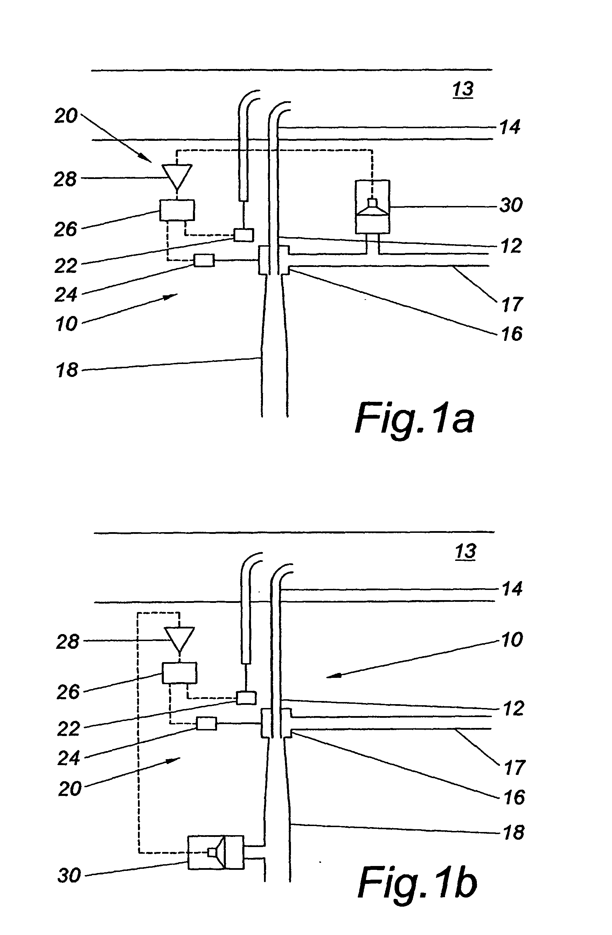

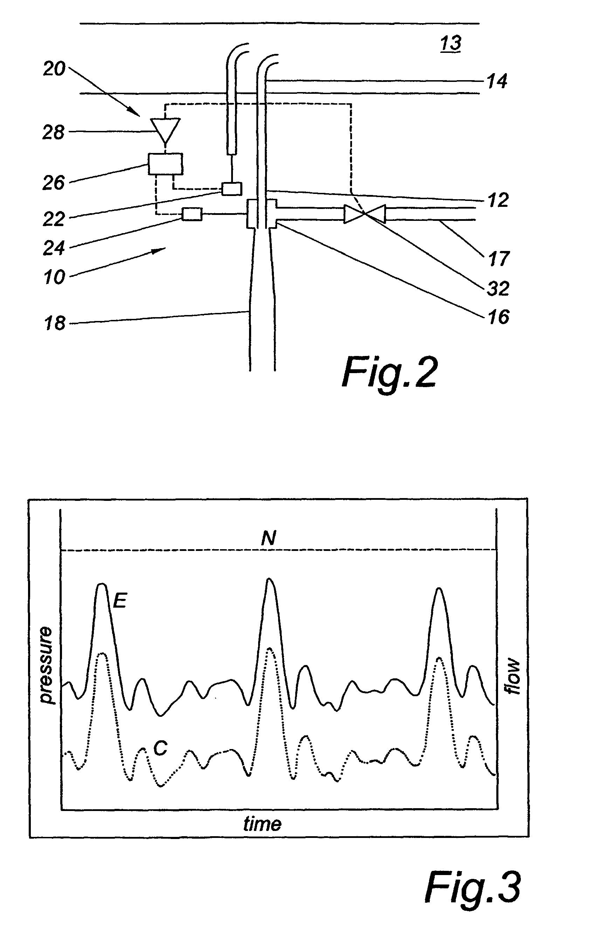

A particulate sampler 10, which is shown in Figures 1a, 1b and 2, preferably includes multiple components that are removably secured to one another. The components are typically constructed from stainless steel, which withstands the harsh environment of the vehicle exhaust gases. The sampler 10 includes a transfer tube assembly 12 having a probe 14. The probe 14 typically includes a curved or straight end portion that is arranged transversely in a tailpipe 13. The probe 14 collects a small exhaust gas sample that contains particulate matter. The probe 14 conveys the exhaust gas sample to a mixer 16 where a dilution gas is introduced to the exhaust gases. Passageway 17 carries the dilution gas to the mixer 16. The dilution and exhaust gases are conveyed through a tunnel 18 where they are mixed together. A filter may be connected to the end of the tunnel 18 for collecting the particulate matter on a filter or other similar device. Alternatively, an analyzer may be connected to the end of the tunnel 18 for analysis of the exhaust gas sample.

Figures 1a and 1b depict the present invention pulsation cancellation device utilizing a membrane, or speaker-like device, driven by an actuator. As shown in Figure 1a, a pressure cancellation system 20 includes a pressure sensor, such as the pressure sensor indicated at 22, for sensing the pressure fluctuations within the tailpipe 13.

For example, as shown in Figure 1a, the actuator 30 may be in fluid communication with the passageway 17. Alternatively, the actuator 30 may be in fluid communication with the dilution tunnel 18. It is to be understood that the actuator 30 may be situated along any portion of a passageway within the sampler 10 in any suitable position, which is best determined through testing of the system.

In operation, an exhaust pressure pulse is detected by pressure sensor 22. The controller 26 then calculates the electric energy needed to create a pressure pulse within the sampler 10 of sufficient magnitude and in phase with the pressure pulse detected by sensor 22. The controller 26 commands the amplifier 28 to drive the actuator to introduce a pressure pulse within the sampler 10 to cancel the effects of the pressure pulse from the tailpipe 13. The amplitude and phase of the pressure cancellation pulse produced by the actuator 30 is of a sufficient nature to significantly prevent undesirable changes in the flow rate of sampled gasses in the probe 12 and transfer tube 14. Closed loop feedback for the controller to use to gauge the effectiveness of the control is provided from pressure transducer 24, whose reading ideally differs from the reading from pressure transducer 22 by a stable amount consistent with the desired flow in the probe 14 and transfer tube 12.

Alternatively, the undesirable pressure wave introduced by the tailpipe 13 may be cancelled utilizing a proportional control valve 32. The proportional control valve 32 varies the dilution gas flow rate introduced into the mixer 16. The flow of dilution gas may be increased or decreased to cancel the effects of the pressure pulse introduced by the tailpipe 13. Changes in the amount of flow fill and empty the volume internal to the sampling system, changing its internal pressure in the desired way. The control of the proportional control valve 32 is similar to that of the actuator 30, described in relation to Figures 1a and 1b above.

The pressure pulse cancellation is graphically depicted in Figure 3. A pressure pulse E is introduced by the tailpipe 13. A pressure pulse C is introduced by the system 20 in phase with the pressure pulse from the tailpipe 13 to maintain a constant pressure difference and consequent flow of gases through the sampler 10, as depicted by curve N. In this manner, the flow pulsation cancellation device 20 keeps the differential pressure over the length of the probe 14 and transfer tube 12 free of fluctuations and therefore greatly minimizes or eliminates the negative effects of the undesirable pressure pulses introduced by the tailpipe 13.

The invention has been described in an illustrative manner, and it is to be understood that the terminology that has been used is intended to be in the nature of words of description rather than of limitation. Obviously, many modifications and variations of the present invention are possible in light of the above teachings. It is, therefore, to be understood that within the scope of the appended claims the invention may be practiced otherwise than as specifically described.

## Claims

1. A particulate sampler (10) for conveying exhaust gas from exhaust gas source to analysis equipment, said particulate sampler comprising:
- a probe (14) for receiving the exhaust gas;
- a transfer tube (12) for conveying the exhaust gas from a tailpipe (13) to a mixer (16), said mixer (16) mixing the exhaust gas and a dilution gas; and
- a dilution tunnel (18) for mixing and conveying the exhaust gas and dilution gas from said mixer (16) to analysis equipment; and
- a flow pulsation cancellation device (20) in communication with at least one of said tailpipe (13), probe (14), transfer tube (12), mixer (16), and a dilution tunnel (18) for introducing a canceling pressure pulse to minimize the effects of pressures pulses present within the tailpipe (13), wherein the flow pulsation cancellation device (20) includes at least one pressure sensor (22) connected to a controller (26) for sensing the pressure fluctuations within the tailpipe (13),
**characterized in that** the flow pulsation cancellation device (20) further includes a second pressure sensor (24) being in communication with the mixer (16) and connected to the controller (26) for determining a difference in the reading between the sensors (22, 24).

2. The particulate sampler (10) according to claim 1, **characterized in that** the flow pulsation cancellation device (20) includes at least one amplifier (28) which is connected to the controller (26).

3. The particulate sampler (10) according to claim 2, **characterized in that** the flow pulsation cancellation device (20) includes at least one actuator (30) which is connected to the amplifier (28).

4. The particulate sampler (10) according to claim 3, **characterized in that** the actuator (30) comprises a membrane or a speaker-like device.

5. The particulate sampler (10) according to claim 3 or 4, **characterized in that** the actuator (30) is in fluid communication with at least one of said tailpipe (13), probe (14), transfer tube (12), mixer (16) and the dilution tunnel (18).

6. The particulate sampler (10) according to one of the claims 1 or 2, **characterized in that** the flow pulsation cancellation device (20) comprises at least one control valve (32) being positioned in a dilution gas tubing (17), which is in fluid communication with the mixer (16).

## Patentansprüche

1. Partikelsammler (10) zum Befördern von Abgas von einer Abgasquelle zu einem Analysegerät, wobei dieser Partikelsammler umfaßt:
- eine Sonde (14) zur Aufnahme des Abgases;
- ein Überführungsrohr (12) zum Befördern des Abgases von einem Auspuffendrohr (13) zu einem Mischer (16), wobei der Mischer (16) das Abgas und ein Verdünnungsgas mischt; und
- ein Verdünnungstunnel (18) zum Mischen und Befördern des Abgases und des Verdünnungsgases von dem Mischer (16) zum Analysegerät; und
- eine Ausgleichvorrichtung für die Strömungspulsation (20) in Kommunikation mit wenigstens einem aus Auspuffendrohr (13), Sonde (14), Überführungsrohr (12), Mischer (16) und Verdünnungstunnel (18) zum Einführen eines ausgleichenden Druckpulses, um die Auswirkungen von in dem Auspuffendrohr (13) vorhandenen Druckpulsen zu minimieren, wobei die Strömungspulsationsausgleichsvorrichtung (20) wenigstens einen mit einem Regler (26) verbundenen Drucksensor (22) zum Abfühlen der Druckschwankungen im Auspuffendrohr (13) umfasst,
**dadurch gekennzeichnet, dass** die Strömungspulsationsausgleichsvorrichtung (20) außerdem einen zweiten Drucksensor (24), der mit dem Mischer (16) kommuniziert und mit dem Regler (26) verbunden ist, zum Bestimmen einer Anzeigedifferenz zwischen den Sensoren (22, 24) umfasst.

2. Partikelsammler (10) nach Anspruch 1, **dadurch gekennzeichnet, dass** die Strömungspulsationsausgleichsvorrichtung (20) wenigstens einen Verstärker (28) umfasst, der mit dem Regler (26) verbunden ist.

3. Partikelsammler (10) nach Anspruch 2, **dadurch gekennzeichnet, dass** die Strömungspulsationsausgleichsvorrichtung (20) wenigstens ein Stellglied (30) umfasst, das mit dem Verstärker (28) verbunden ist.

4. Partikelsammler (10) nach Anspruch 3, **dadurch gekennzeichnet, dass** das Stellglied (30) eine Membran oder eine lautsprecherartige Vorrichtung umfasst.

5. Partikelsammler (10) nach Anspruch 3 oder 4, **dadurch gekennzeichnet, dass** das Stellglied (30) mit wenigstens einem aus Auspuffendrohr (13), Sonde (14), Überführungsrohr (12), Mischer (16) und Verdünnungstunnel (18) in Fluidkommunikation steht.

6. Partikelsammler (10) nach einem der Ansprüche 1 oder 2, **dadurch gekennzeichnet, dass** die Strömungspulsationsausgleichsvorrichtung (20) wenigstens ein Regelventil (32) umfasst, das in einem Verdünnungsgasrohr (17) angeordnet ist, welches mit dem Mischer (16) in Fluidkommunikation steht.

## Revendications

1. Echantillonneur de particules (10) pour transporter des gaz d'échappement depuis une source de gaz d'échappement à un équipement d'analyse, ledit échantillonneur de particules comprenant :
- une sonde (14) pour recevoir les gaz d'échappement ;
- un tube de transfert (12) pour transporter les gaz d'échappement depuis un tuyau de queue (13) à un mélangeur (16), ledit mélangeur (16) mélangeant les gaz d'échappement et un gaz de dilution ; et
- un tunnel de dilution (18) pour mélanger et transporter les gaz d'échappement et le gaz de dilution depuis ledit mélangeur (16) à un équipement d'analyse ;
- un dispositif d'annulation d'impulsion d'écoulement (20) en communication avec au moins un dudit tuyau de queue (13), de la sonde (14), du tube de transfert (12), du mélangeur (16), et du tunnel de dilution (18) pour introduire une impulsion de pression d'annulation pour minimiser les effets des impulsions des pressions présentes à l'intérieur du tuyau de queue (13), dans lequel le dispositif d'annulation d'impulsion d'écoulement (20) inclut au moins un capteur de pression (22) relié à un contrôleur (26) pour détecter les fluctuations des pressions à l'intérieur du tuyau de queue (13),
**caractérisé en ce que** le dispositif d'annulation d'impulsion d'écoulement (20) inclut, en outre, un second capteur de pression (24) qui est en communication avec le mélangeur (16) et relié au contrôleur (26) pour déterminer une différence dans la mesure entre les capteurs (22, 24).

2. Echantillonneur de particules (10) selon la revendication 1, **caractérisé en ce que** le dispositif d'annulation d'impulsion d'écoulement (20) inclut au moins un amplificateur (28) qui est relié au contrôleur (26).

3. Echantillonneur de particules (10) selon la revendication 2, **caractérisé en ce que** le dispositif d'annulation d'impulsion d'écoulement (20) inclut au moins un organe de commande (30) qui est connecté à l'amplificateur (28).

4. Echantillonneur de particules (10) selon la revendication 3, **caractérisé en ce que** l'organe de commande (30) comprend une membrane ou un dispositif du type haut-parleur.

5. Echantillonneur de particules (10) selon la revendication 3 ou 4, **caractérisé en ce que** l'organe de commande (30) est en communication fluidique avec au moins un dudit tuyau de queue (13), de la sonde (14), du tube de transfert (12), du mélangeur (16) et du tunnel de dilution (18).

6. Echantillonneur de particules (10) selon l'une des revendications 1 ou 2, **caractérisé en ce que** le dispositif d'annulation d'impulsion d'écoulement (20) comprend au moins une soupape de commande (32) qui est positionnée dans la tuyauterie du gaz de dilution (17) qui est en communication fluidique avec le mélangeur (16).
